# EUROPEAN PATENT APPLICATION

(11) **EP 4 787 688 A1**
(43) Date of publication of application: **05.08.2026**
(21) Application number: 24871742.3
(22) Date of filing: 02.09.2024
(51) Int. Cl.: H02K 19/12, H02K 19/36

(54) **ROTARY ELECTRIC MACHINE**

(30) Priority: 28.09.2023 JP 2023168361
(71) Applicant: DENSO CORPORATION, Kariya-city, Aichi-pref., 448-8661 (JP)
(72) Inventor: SUZUKI, Takashi, Kariya-city, Aichi 448-8661 (JP); YOSHIMURA, Masataka, Kariya-city, Aichi 448-8661 (JP)
(74) Representative: Kuhnen & Wacker Patent- und Rechtsanwaltsbüro PartG mbB
(86) International application number: PCT/JP2024/031467
(87) International publication number: WO 2025/069942

(57) **Abstract**

A rotating electric machine (40) includes a stator (50) having a stator coil (52), and a rotor (60) radially opposed to the stator. The rotor has: main pole portions (62) provided respectively for magnetic poles, which are aligned in a circumferential direction, and each protruding in a radial direction; and a field coil (70) wound on each of the main pole portions. The field coil has a first coil section (71) and a second coil section (72). The rotating electric machine further includes an electrical path (80, 81) connected in parallel with at least one of the first and second coil sections. The electrical path is configured to have electric current flowing therethrough in one direction.

## Description

### [CROSS-REFERENCE TO RELATED APPLICATION]

The present application is based on Japanese Patent Application No. 2023-168361 filed on September 28, 2023, the contents of which are incorporated by reference into the present application.

### [TECHNICAL FIELD]

The present disclosure relates to wound-field rotating electric machines.

### [BACKGROUND ART]

Conventionally, wound-field rotating electric machines, which include a stator and a rotor, have been known as disclosed in, for example, Patent Document 1. The rotor has: main pole portions provided respectively for magnetic poles, which are aligned in a circumferential direction, and each protruding in a radial direction; and a field coil wound on each of the main pole portions. The stator includes a stator coil through which electric current including high-frequency current flows. Consequently, a voltage is induced in the field coil, causing field current to flow in the field coil.

### [PRIOR ART LITERATURE]

### [PATENT LITERATURE]

[Patent Document 1]: Japanese Patent No. JP 6969529 B2

### [SUMMARY OF THE INVENTION]

There is still room for improvement in techniques for improving the torque of a rotating electric machine and reducing torque ripple and losses by reducing field current ripple.

A primary object of the present disclosure is to provide a rotating electric machine which enables increase in the field current flowing in the field coil thereof.

According to the present disclosure, there is provided a rotating electric machine comprising:
a stator having a stator coil; and
a rotor radially opposed to the stator,
wherein:
   the rotor has
      main pole portions provided respectively for magnetic poles, which are aligned in a circumferential direction, and each protruding in a radial direction, and
      a field coil wound on each of the main pole portions;
   the field coil has a first coil section and a second coil section;
   the rotating electric machine further comprises an electrical path connected in parallel with at least one of the first and second coil sections; and
   the electrical path is configured to have electric current flowing therethrough in one direction.

With the electrical path provided in the rotating electric machine, it becomes possible to increase field current flowing through the first and second coil sections and reduce ripple of the field current. Consequently, it becomes possible to achieve improvement in the torque of the rotating electric machine; and it also becomes possible to achieve reduction in the torque ripple and losses in the rotating electric machine.

### [BRIEF DESCRIPTION OF THE DRAWINGS]

The above-described object, other objects, features and beneficial advantages according to the present disclosure will become more apparent from the following detailed explanation with reference to the accompanying drawings. In the drawings:
FIG. 1 is an overall configuration diagram of a control system for a rotating electric machine according to a first embodiment;
FIG. 2 is a diagram illustrating an inverter and its peripheral configuration;
FIG. 3 is a transverse cross-sectional view of both a rotor and a stator;
FIG. 4 is a diagram illustrating an electric circuit formed in the rotor;
FIG. 5 include time charts illustrating changes in electric currents flowing respectively through first and second coil sections and torque of the rotating electric machine;
FIG. 6 is a diagram illustrating an electric circuit formed in a rotor of a rotating electric machine according to a comparative example;
FIG. 7 include time charts illustrating changes in electric currents flowing respectively through first and second coil sections and torque of the rotating electric machine according to the comparative example;
FIG. 8 is a diagram illustrating an electric circuit formed in a rotor of a rotating electric machine according to a second embodiment;
FIG. 9 include time charts illustrating changes in electric currents flowing respectively through first and second coil sections and torque of the rotating electric machine according to the second embodiment;
FIG. 10 is a diagram illustrating an electric circuit formed in a rotor of a rotating electric machine according to a third embodiment;
FIG. 11 include time charts illustrating changes in electric currents flowing respectively through first and second coil sections and torque of the rotating electric machine according to the third embodiment;
FIG. 12 is a diagram illustrating an electric circuit formed in a rotor of a rotating electric machine according to a fourth embodiment;
FIG. 13 include time charts illustrating changes in electric currents flowing respectively through first and second coil sections and torque of the rotating electric machine according to the fourth embodiment;
FIG. 14 is a diagram illustrating an electric circuit formed in a rotor of a rotating electric machine according to a fifth embodiment;
FIG. 15 include time charts illustrating changes in electric currents flowing respectively through first and second coil sections and torque of the rotating electric machine according to the fifth embodiment;
FIG. 16 is a diagram illustrating an electric circuit formed in a rotor of a rotating electric machine according to another embodiment;
FIG. 17 is a diagram illustrating an electric circuit formed in a rotor of a rotating electric machine according to yet another embodiment;
FIG. 18 is a diagram illustrating an electric circuit formed in a rotor of a rotating electric machine according to still another embodiment;
FIG. 19 is a diagram illustrating an electric circuit formed in a rotor of a rotating electric machine according to another embodiment;
FIG. 20 is a diagram illustrating an electric circuit formed in a rotor of a rotating electric machine according to yet another embodiment;
FIG. 21 is a diagram illustrating an electric circuit formed in a rotor of a rotating electric machine according to still another embodiment;
FIG. 22 is a diagram illustrating an electric circuit formed in a rotor of a rotating electric machine according to another embodiment;
FIG. 23 is a diagram illustrating an electric circuit formed in a rotor of a rotating electric machine according to yet another embodiment;
FIG. 24 is a diagram illustrating an electric circuit formed in a rotor of a rotating electric machine according to still another embodiment;
FIG. 25 is a diagram illustrating an electric circuit formed in a rotor of a rotating electric machine according to another embodiment;
FIG. 26 is a diagram illustrating an electric circuit formed in a rotor of a rotating electric machine according to yet another embodiment;
FIG. 27 is a diagram illustrating an electric circuit formed in a rotor of a rotating electric machine according to still another embodiment;
FIG. 28 is a diagram illustrating an electric circuit formed in a rotor of a rotating electric machine according to another embodiment;
FIG. 29 is a diagram illustrating an electric circuit formed in a rotor of a rotating electric machine according to yet another embodiment;
FIG. 30 is a diagram illustrating an electric circuit formed in a rotor of a rotating electric machine according to still another embodiment;
FIG. 31 is a diagram illustrating an electric circuit formed in a rotor of a rotating electric machine according to another embodiment;
FIG. 32 is a diagram illustrating an electric circuit formed in a rotor of a rotating electric machine according to yet another embodiment;
FIG. 33 is a diagram illustrating an electric circuit formed in a rotor of a rotating electric machine according to still another embodiment;
FIG. 34 is a diagram illustrating an electric circuit formed in a rotor of a rotating electric machine according to another embodiment; and
FIG. 35 is a transverse cross-sectional view of both a rotor and a stator of a rotating electric machine according to yet another embodiment.

### [EMBODIMENTS FOR CARRYING OUT THE INVENTION]

Embodiments will now be described with reference to the drawings. It should be noted that in the embodiments, functionally and/or structurally corresponding and/or associated parts will be designated by the same reference signs or by reference signs differing in the hundreds and higher digits as appropriate. Moreover, it also should be noted that for corresponding and/or associated parts in one embodiment, reference may be made to the explanation thereof in the other embodiments.

### [First Embodiment]

Hereinafter, a first embodiment embodying a rotating electric machine according to the present disclosure will be described with reference to the drawings. The rotating electric machine and a control device together constitute a rotating electric machine control system; and the control system is installed in a vehicle. The rotating electric machine serves as a driving power source of the vehicle.

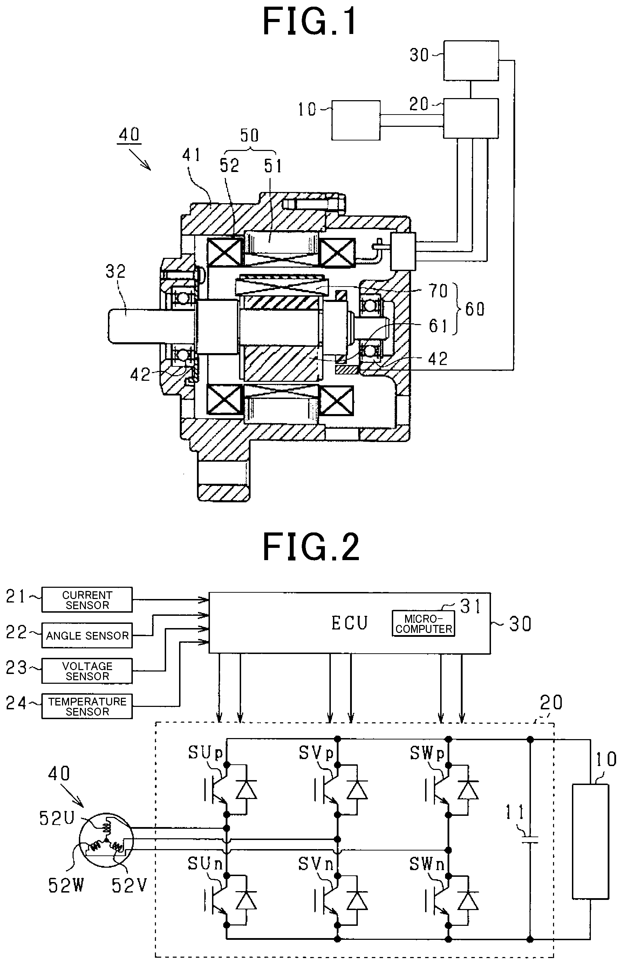

As shown in FIG. 1, the control system includes a DC power source 10, an inverter 20, a control device 30 and a rotating electric machine 40. The rotating electric machine 40 is configured as a self-excited wound-field synchronous rotating electric machine. In addition, the rotating electric machine 40, the inverter 20 and the control device 30 may be either integrated into a single electromechanical drive apparatus or configured as individual components.

The rotating electric machine 40 includes a housing 41, and a stator 50 and a rotor 60 both of which are accommodated in the housing 41. In the present embodiment, the rotating electric machine 40 is of an inner rotor type such that the rotor 60 is arranged radially inside the stator 50.

The stator 50 includes a stator core 51 and a stator coil 52 wound on the stator core 51. The stator coil 52 may be formed of, for example, copper wires. The stator coil 52 includes a U-phase winding 52U, a V-phase winding 52V and a W-phase winding 52W, which are arranged in such a manner as to be offset from each other by 120° in electrical angle.

The rotor 60 includes a rotor core 61 and a field coil 70. The field coil 70 may be formed, for example, of aluminum wires, copper wires or CNTs (Carbon Nanotubes). The rotor core 61 has a center hole in which a rotating shaft 32 is inserted. The rotating shaft 32 is rotatably supported by the housing 41 via a pair of bearings 42.

As shown in FIG. 2, the inverter 20 includes: a U-phase series connection unit consisting of a U-phase upper-arm switch SUp and a U-phase lower-arm switch Sun that are connected in series with each other; a V-phase series connection unit consisting of a V-phase upper-arm switch SVp and a V-phase lower-arm switch SVn that are connected in series with each other; and a W-phase series connection unit consisting of a W-phase upper-arm switch SWp and a W-phase lower-arm switch SWn that are connected in series with each other. To a junction point between the U-phase upper-arm and lower-arm switches SUp and SUn, there is connected a first end of the U-phase winding 52U. To a junction point between the V-phase upper-arm and lower-arm switches SVp and SVn, there is connected a first end of the V-phase winding 52V. To a junction point between the W-phase upper-arm and lower-arm switches SWp and SWn, there is connected a first end of the W-phase winding 52W. On the other hand, a second end of the U-phase winding 52U, a second end of the V-phase winding 52V and a second end of the W-phase winding 52W are connected together at a neutral point. That is, in the present embodiment, the U-phase, V-phase and W-phase windings 52U, 52V and 52W of the stator coil 52 are star-connected. Moreover, in the present embodiment, each of the switches SUp, SVp, SWp, SUn, SVn and SWn is implemented by an IGBT. In addition, each of the switches SUp, SVp, SWp, SUn, SVn and SWn has a freewheeling diode connected in antiparallel thereto. It should be noted that each of the switches SUp, SVp, SWp, SUn, SVn and SWn may alternatively be implemented by, for example, an N-channel MOSFET.

Each of the U-phase, V-phase and W-phase upper-arm switches SUp, SVp and SWp has its collector, which is a higher-potential-side terminal, connected to a positive electrode terminal of the DC power source 10. On the other hand, each of the U-phase, V-phase and W-phase lower-arm switches SUn, SVn and SWn has its emitter, which is a lower-potential-side terminal, connected to a negative electrode terminal of the DC power source 10. In addition, a smoothing capacitor 11 is connected in parallel with the DC power source 10.

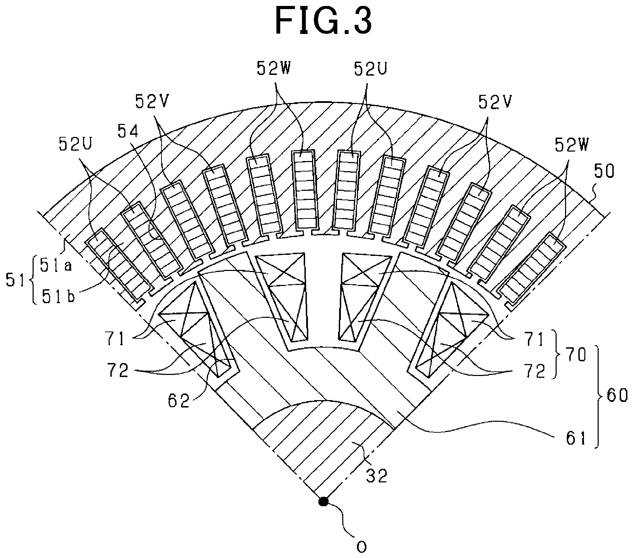

Next, the stator 50 and the rotor 60 will be described in detail with reference to FIG. 3.

In the rotating electric machine 40, both the stator 50 and the rotor 60 are arranged coaxially with the rotating shaft 32 (specifically, arranged on the central axis O of rotation of the rotating shaft 32). Hereinafter, the direction in which the central axis O of rotation of the rotating shaft 32 extends will be referred to as the axial direction; the directions of extending radially from the central axis O of rotation of the rotating shaft 32 will be referred to as radial directions; and the direction of extending along a circle whose center is on the central axis O of rotation of the rotating shaft 32 will be referred to as the circumferential direction.

The stator 50 is formed of a soft-magnetic material. For example, the stator 50 may be formed by laminating steel sheets in the axial direction. The stator 50 has an annular back yoke 51a and a plurality of teeth 51b each protruding radially inward from the back yoke 51a. Between circumferentially adjacent teeth 51b, there are formed a plurality of slots 54 in alignment with each other in the circumferential direction. The stator coil 52 is formed by having the U-phase, V-phase and W-phase windings 52U, 52V and 52W accommodated in a predetermined order in the slots 54.

The rotor 60 is also formed of a soft-magnetic material. For example, the rotor 60 may be formed by laminating steel sheets in the axial direction. The rotor 60 has a cylindrical rotor core 61 and a plurality of main pole portions 62 each protruding radially outward from the rotor core 61. More particularly, in the present embodiment, the rotor 60 has eight main pole portions 62 formed at equal intervals in the circumferential direction.

The field coil 70 has a first coil section 71 and a second coil section 72. On each of the main pole portions 62, the first coil section 71 is wound on the radially outer side while the second coil section 72 is wound on the radially inner side. Moreover, on each of the main pole portions 62, the first and second coil sections 71 and 72 are wound in the same direction. Furthermore, for each circumferentially-adjacent pair of the main pole portions 62, the winding direction of the first and second coil sections 71 and 72 on one of the pair of the main pole portions 62 is opposite to the winding direction of the first and second coil sections 71 and 72 on the other of the pair of the main pole portions 62. Consequently, the magnetization directions of each circumferentially-adjacent pair of the main pole portions 62 become opposite to each other.

Referring back to FIG. 2, the control system also includes a current sensor 21, an angle sensor 22, a voltage sensor 23 and a temperature sensor 24. The current sensor 21 detects at least two of the three phase currents flowing in the rotating electric machine 40. The angle sensor 22 detects the rotation angle (or electrical angle) of the rotor 60. The angle sensor 22 may be implemented by, for example, a resolver. In the present embodiment, the voltage sensor 23 detects the voltage of the DC power source 10. The temperature sensor 24 detects the temperature of the rotating electric machine 40 or the like. The temperature sensor 24 may be implemented by, for example, a thermistor. The detected values of the sensors 21 to 24 are inputted to the control device 30.

The control device 30 is implemented by an ECU (Electronic Control Unit) which is mainly composed of a microcomputer 31. The microcomputer 31 includes a CPU (Central Processing Unit). The functions of the microcomputer 31 may be provided by software recorded in a tangible memory device and a computer that executes it, only software, only hardware, or a combination thereof. For example, in the case of the microcomputer 31 being configured with an electronic circuit that is hardware, it may be configured with a digital circuit that includes a number of logic circuits, or with an analog circuit. For example, the microcomputer 31 may execute programs stored in a non-transitory tangible storage medium that is provided in the microcomputer 31 as a storage unit. The programs include a program for performing a control process of the rotating electric machine 40. Moreover, methods corresponding to the programs may be carried out by executing sets of instructions constituting the programs. The storage unit may be, for example, a nonvolatile memory. In addition, the programs stored in the storage unit may be downloaded and updated, for example by OTA (Over-The-Air), via a communication network such as the Internet.

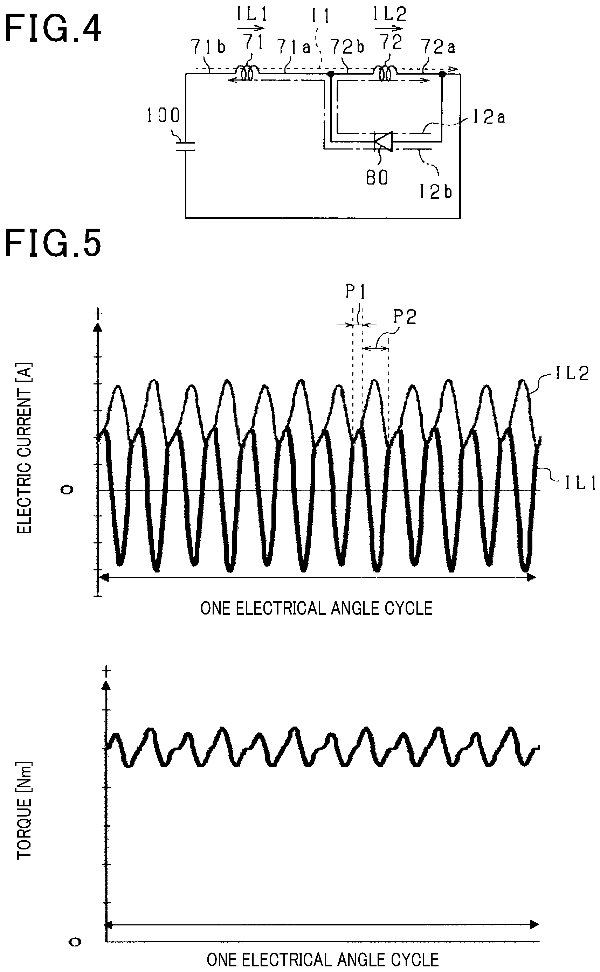

Next, an electric circuit formed in the rotor 60, which is a characteristic configuration of the rotating electric machine 40 according to the present embodiment, will be described. FIG. 4 shows the electric circuit which is formed in the rotor 60 and includes the first and second coil sections 71 and 72. It should be noted that: the first coil section 71 shown in FIG. 4 is a series connection unit of those parts of the first coil section 71 which are wound respectively on the main pole portions 62; and the second coil section 72 shown in FIG. 4 is a series connection unit of those parts of the second coil section 72 which are wound respectively on the main pole portions 62.

The rotor 60 includes a parallel diode 80 (corresponding to an "electrical path") and a series capacitor 100. The parallel diode 80 is connected in parallel with the second coil section 72. Specifically, the parallel diode 80 has its anode connected with a first end 72a of the second coil section 72, and has its cathode connected with a second end 72b of the second coil section 72. Consequently, a closed circuit is formed which includes the second coil section 72 and the parallel diode 80. In the closed circuit, electric current flows in one direction from the anode side to the cathode side of the parallel diode 80.

A first end 71a of the first coil section 71 is connected with the second end 72b of the second coil section 72. On the other hand, a second end 71b of the first coil section 71 is connected with the first end 72a of the second coil section 72 via the series capacitor 100. Consequently, a closed circuit is formed which includes the first coil section 71, the second coil section 72 and the series capacitor 100. In the present embodiment, the number of turns of the second coil section 72 is set to be greater than the number of turns of the first coil section 71. In addition, the series capacitor 100 may be implemented by, for example, a ceramic capacitor or a film capacitor.

The control device 30 generates drive signals for turning on/off the switches SUp, SVp, SWp, SUn, SVn and SWn of the inverter 20. Specifically, in order to convert DC power outputted from the DC power source 10 into AC power and supply the resultant AC power to the U-phase, V-phase and W-phase windings 52U, 52V and 52W, the control device 30 generates drive signals for turning on/off the switches SUp, SVp, SWp, SUn, SVn and SWn and outputs the generated drive signals to the gates of the switches SUp, SVp, SWp, SUn, SVn and SWn. Consequently, in each of the U, V and W phases, the upper-arm switch and the lower-arm switch are alternately turned on with a dead time provided therebetween.

In the present embodiment, the control device 30 turns on/off the switches SUp, SVp, SWp, SUn, SVn and SWn so as to supply resultant current, which is the resultant of fundamental current and high-frequency current (more specifically, high-frequency excitation current), to each of the U-phase, V-phase and W-phase windings 52U, 52V and 52W. The fundamental current is electric current mainly for causing the rotating electric machine 40 to generate torque. On the other hand, the high-frequency current, whose frequency is higher than that of the fundamental current, is electric current mainly for exciting the first and second coil sections 71 and 72 of the field coil 70 and thereby inducing field current in the field coil 70. In addition, U-phase, V-phase and W-phase currents, which are the resultant currents flowing respectively through the U-phase, V-phase and W-phase windings 52U, 52V and 52W, are offset in phase from each other by 120° in electrical angle.

It should be noted that the high-frequency current supplied to the stator coil 52 may be harmonic current whose variation frequency is N times (here, N is an integer greater than or equal to 2) the frequency of the fundamental current, or may be electric current whose variation frequency is deviated from N times the frequency of the fundamental current.

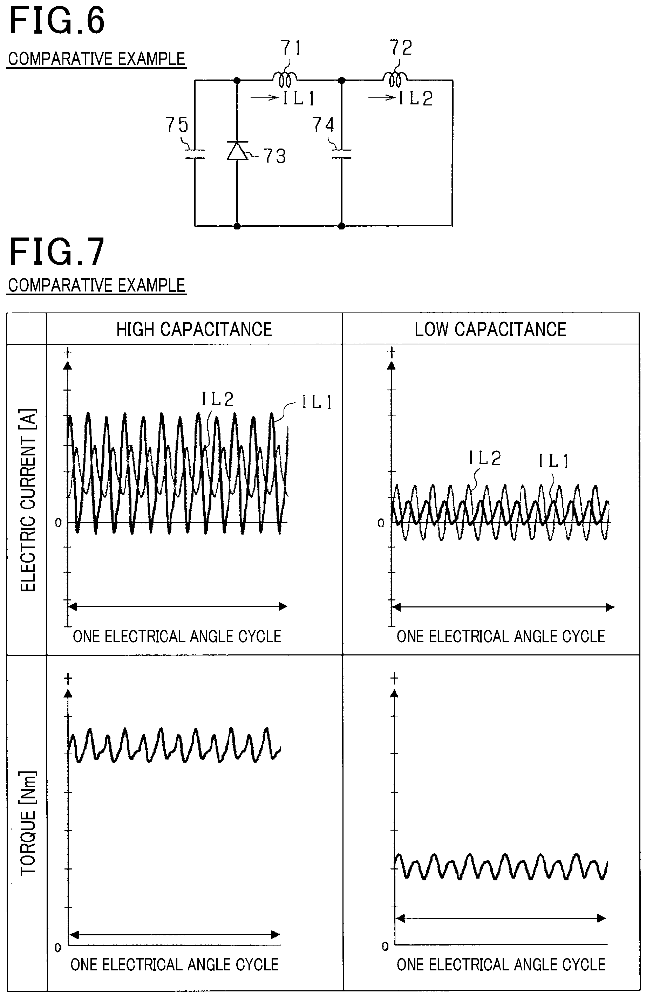

With the electric circuit shown in FIG. 4, the DC component of the field current can be increased in comparison with an electric circuit according to a comparative example shown in FIG. 6. The cause of the increase will be explained with reference to FIG. 5. In FIG. 5, there are shown the changes in the electric current IL1 flowing through the first coil section 71, the electric current IL2 flowing through the second coil section 72 and the torque of the rotating electric machine 40 in one electrical angle cycle of the rotor 60 when the rotational speed of the rotor 60 is 3000rpm and the excitation frequency (more specifically, the frequency of the high-frequency current) is 2.4kHz. In addition, as shown in FIG. 4, the direction of the electric current IL1 flowing through the first coil section 71 is defined to be positive when it flows from the second end 71b side to the first end 71a side of the first coil section 71; and the direction of the electric current IL2 flowing through the second coil section 72 is defined to be positive when it flows from the second end 72b side to the first end 72a side of the second coil section 72.

When the high-frequency current flows through the stator coil 52, voltages are induced in the first and second coil sections 71 and 72, causing field current to flow in the field coil 70. The induced voltages of the first and second coil sections 71 and 72 are identical in phase. The electric currents IL1 and IL2 flowing respectively through the first and second coil sections 71 and 72 include the frequency components of the high-frequency current.

In a first period P1, the electric current IL1 flows from the first coil section 71 to the second coil section 72.

During a second period P2 in which the electric current IL2 flowing through the second coil section 72 is higher than the electric current IL1 flowing through the first coil section 71, electric current I2a flows through the closed circuit that includes the second coil section 72 and the parallel diode 80. It should be noted that the electric current I2a flows through the closed circuit when the voltage across the second coil section 72 exceeds the forward voltage Vf of the parallel diode 80.

Since electric current continues to flow through the closed circuit that includes the second coil section 72 and the parallel diode 80, it becomes possible to increase the DC component of the field current. As a result, it becomes possible to increase the DC component of the magnetic flux of the rotor 60; thus, it becomes possible to increase the torque of the rotating electric machine 40.

Moreover, during part of the second period P2, electric current I2b, which is a part of the electric current flowing through the closed circuit that includes the second coil section 72 and the parallel diode 80, flows to the first coil section 71. In this case, the sign of the change in the electric current IL1 flowing through the first coil section 71 (i.e., the increase or decrease in the electric current IL1) is different from the sign of the change in the electric current IL2 flowing through the second coil section 72 (i.e., the increase or decrease in the electric current IL2). Consequently, it becomes possible to reduce ripple of the field current that is the resultant of the electric currents IL1 and IL2; thus, it becomes possible to reduce torque ripple of the rotating electric machine 40.

FIG. 6 shows an electric circuit formed in a rotor of a rotating electric machine according to a comparative example. The electric circuit includes a diode 73, a first capacitor 74 and a second capacitor 75. FIG. 7 shows the changes in the electric current IL1 flowing through the first coil section 71, the electric current IL2 flowing through the second coil section 72 and the torque of the rotating electric machine in one electrical angle cycle of the rotor when the rotational speed of the rotor is 3000rpm and the excitation frequency is 2.4kHz. It should be noted that scales on the vertical axes representing electric current and torque in FIG. 7 are identical to those on the vertical axes representing electric current and torque in FIG. 5.

In the comparative example, the DC component of the field current is increased mainly by charging/discharging the first capacitor 74. The left column in FIG. 7 shows time charts in the case of setting the capacitance of the first capacitor 74 so that the torque of the rotating electric machine according to the comparative example becomes equal to the torque of the rotating electric machine 40 according to the present embodiment. In this case, the capacitance of the first capacitor 74 in the comparative example becomes higher than the capacitance of the series capacitor 100 in the present embodiment, and more specifically, becomes approximately three times the capacitance of the series capacitor 100. As a result, the size of the first capacitor 74 in the comparative example becomes greater than the size of the series capacitor 100 in the present embodiment.

The right column in FIG. 7 shows time charts in the case of setting the capacitance of the first capacitor 74 in the comparative example to be approximately equal to the capacitance of the series capacitor 100 in the present embodiment. In this case, the torque of the rotating electric machine according to the comparative example becomes considerably lower than the torque of the rotating electric machine 40 according to the present embodiment, and more specifically, becomes approximately 1/3 of the torque of the rotating electric machine 40 according to the present embodiment.

Setting the number of turns of the second coil section 72, which has lower electric current ripple and a greater DC component, to be greater than the number of turns of the first coil section 71, it is possible to enhance the effect of reducing the field current ripple and the effect of increasing the DC component of the field current, thereby enhancing the effect of reducing the torque ripple and the effect of increasing the torque of the rotating electric machine 40. Moreover, it is also possible to achieve the effect of reducing losses (e.g., losses in the rotor 60, and more specifically, copper loss and iron loss) by the reduction in the field current ripple.

According to the present embodiment described above in detail, it becomes possible to increase the field current and reduce the ripple of the field current, while reducing the capacitance of the capacitor provided in the rotor 60. Consequently, it becomes possible to achieve improvement in the torque of the rotating electric machine 40; and it also becomes possible to achieve reduction in the torque ripple and losses by the reduction in the field current ripple.

### [Second Embodiment]

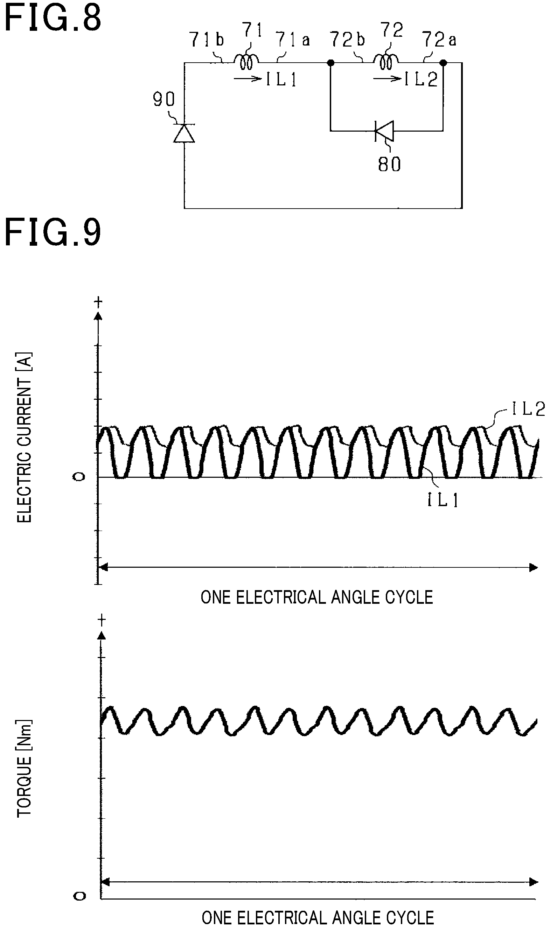

Hereinafter, a second embodiment will be described with reference to the drawings, focusing on the differences thereof from the first embodiment. In the second embodiment, as shown in FIG. 8, the rotor 60 includes a series diode 90 (corresponding to a "restriction unit") instead of the series capacitor 100 described in the first embodiment. The series diode 90 has its anode connected with the first end 72a of the second coil section 72, and has its cathode connected with the second end 71b of the first coil section 71. Consequently, a closed circuit is formed which includes the first coil section 71, the second coil section 72 and the series diode 90. In addition, the anodes of the parallel diode 80 and the series diode 90 are electrically connected with each other.

FIG. 9 shows the changes in the electric current IL1 flowing through the first coil section 71, the electric current IL2 flowing through the second coil section 72 and the torque of the rotating electric machine 40 in one electrical angle cycle of the rotor 60 when the rotational speed of the rotor 60 is 3000rpm and the excitation frequency is 2.4kHz. It should be noted that scales on the vertical axes representing electric current and torque in FIG. 9 are identical to those on the vertical axes representing electric current and torque in FIG. 5.

By the series diode 90, electric current is prevented from flowing through the first coil section 71 in a direction from the first end 71a side to the second end 71b side. Consequently, the electric current IL1 flowing through the first coil section 71 is rectified; thus, ripple of the electric current IL1 flowing through the first coil section 71 is reduced. Moreover, by the rectification of the electric current IL1 flowing through the first coil section 71, the electric current IL2 flowing through the second coil section 72 is also changed. With the above-described rectification effect, it becomes possible to reduce ripple of the field current and thus torque ripple of the rotating electric machine 40.

Of the first and second coil sections 71 and 72, the first coil section 71, which has stronger magnetic coupling with the stator coil 52, is connected in series with the series diode 90; and the second coil section 72, which has weaker magnetic coupling with the stator coil 52, is connected in parallel with the parallel diode 80. The influence of the voltage induced in the coil section having weaker magnetic coupling with the stator coil 52 is less than the influence of the voltage induced in the coil section having stronger magnetic coupling with the stator coil 52; therefore, with the parallel diode 80 connected in parallel with the second coil section 72 that has weaker magnetic coupling with the stator coil 52, it becomes possible to further enhance the effect of reducing the field current ripple and the effect of increasing the DC component of the field current. In addition, in the present embodiment, of the first and second coil sections 71 and 72, the second coil section 72, which is radially located farther from the stator coil 52 than the first coil section 71 is, has weaker magnetic coupling with the stator coil 52 than the first coil section 71 does.

Of the first and second coil sections 71 and 72, the number of turns of the second coil section 72 which has weaker magnetic coupling with the stator coil 52 is set to be greater than the number of turns of the first coil section 71 that has stronger magnetic coupling with the stator coil 52. Setting the number of turns of the second coil section 72, which has lower electric current ripple and a greater DC component, to be greater than the number of turns of the first coil section 71, it is possible to enhance the effect of reducing the field current ripple and the effect of increasing the DC component of the field current, thereby enhancing the effect of reducing the torque ripple and the effect of increasing the torque of the rotating electric machine 40. Moreover, the reduction in the field current ripple also contributes to improvement in the efficiency of the rotating electric machine 40. In addition, the electrical load on the diodes 80 and 90 is also reduced.

### [Modifications of Second Embodiment]

The orientations of the parallel diode 80 and the series diode 90 may be modified to be opposite to those in the second embodiment. More specifically, the parallel diode 80 may have its cathode connected with the first end 72a of the second coil section 72, and have its anode connected with the second end 72b of the second coil section 72. Moreover, the series diode 90 may have its cathode connected with the first end 72a of the second coil section 72, and have its anode connected with the second end 71b of the first coil section 71. In this case, the cathodes of the parallel diode 80 and the series diode 90 are electrically connected with each other.

The parallel diode 80 and the series diode 90 are not limited to diodes, but may alternatively be other elements that are configured to have electric current flowing therethrough in one direction. For example, as the parallel diode 80 and the series diode 90, elements may be employed each of which has a first terminal and a second terminal, allows electric current to flow therethrough from the first terminal to the second terminal, and inhibits electric current from flowing therethrough from the second terminal to the first terminal. More specifically, as the parallel diode 80 and the series diode 90, body diodes of MOSFETs (e.g., N-channel MOSFETs) may be employed. In this case, the control device 30 may perform synchronous rectification by turning on/off the MOSFETs. Moreover, the MOSFETs may be turned on/off by a circuit built in the rotor 60, or by wireless communication via a transformer or the like.

### [Third Embodiment]

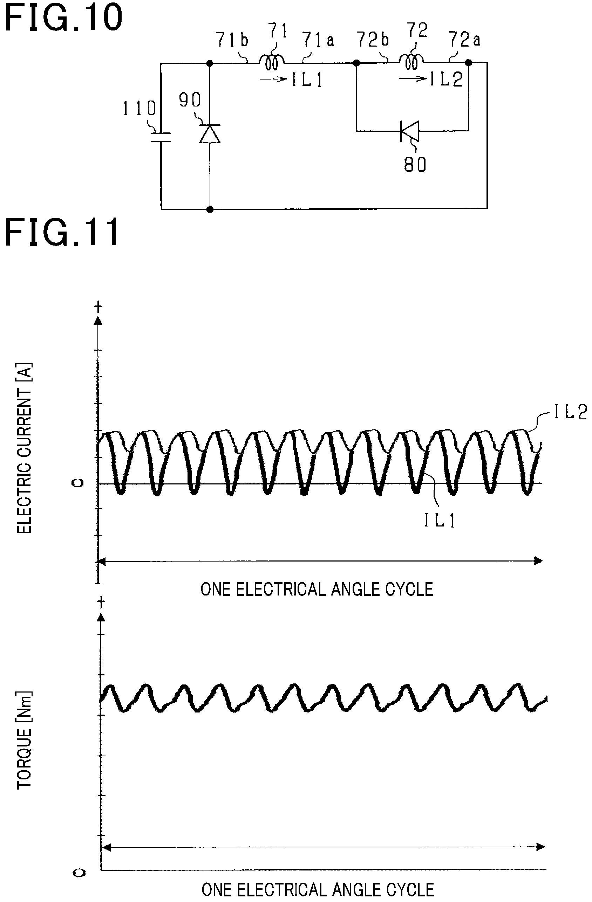

Hereinafter, a third embodiment will be described with reference to the drawings, focusing on the differences thereof from the second embodiment. In the third embodiment, as shown in FIG. 10, the rotor 60 further includes a parallel capacitor 110 that is connected in parallel with the series diode 90. A first end of the parallel capacitor 110 is connected with the second end 71b of the first coil section 71; and a second end of the parallel capacitor 110 is connected with the first end 72a of the second coil section 72. Consequently, a closed circuit is formed which includes the first coil section 71, the second coil section 72 and the parallel capacitor 110. In the present embodiment, the capacitance of the parallel capacitor 110 is lower than the capacitance of the series capacitor 100 shown in FIG. 4, and more specifically, may be, for example, lower than or equal to 1/2, 1/3 or 1/4 of the capacitance of the series capacitor 100. In addition, the parallel capacitor 110 may be implemented by, for example, a ceramic capacitor or a film capacitor.

FIG. 11 shows the changes in the electric current IL1 flowing through the first coil section 71, the electric current IL2 flowing through the second coil section 72 and the torque of the rotating electric machine 40 in one electrical angle cycle of the rotor 60 when the rotational speed of the rotor 60 is 3000rpm and the excitation frequency is 2.4kHz. It should be noted that scales on the vertical axes representing electric current and torque in FIG. 11 are identical to those on the vertical axes representing electric current and torque in FIG. 9.

With the parallel capacitor 110, the impedance of the closed circuit is lowered, making it easier for electric current to flow through the closed circuit. Consequently, it becomes to increase the DC component of the field current. Moreover, with the parallel capacitor 110, the changes in the electric current IL1 flowing through the first coil section 71 and the electric current IL2 flowing through the second coil section 72 are mitigated, resulting in smoother waveforms of the electric currents and changes in phase of the waveforms of the electric currents. Consequently, with the smoother waveforms of the electric currents and the changes in phase of the waveforms of the electric currents, it becomes possible to reduce the field current ripple and the torque ripple that depends on the combination of the two coil sections 71 and 72. Further, the reduction in the field current ripple contributes to improvement in the efficiency of the rotating electric machine 40. Moreover, the electrical load on the diodes 80 and 90 is also reduced. In addition, in the present embodiment, the electrical load on the parallel capacitor 110 is also reduced compared to the comparative example described in the first embodiment.

### [Fourth Embodiment]

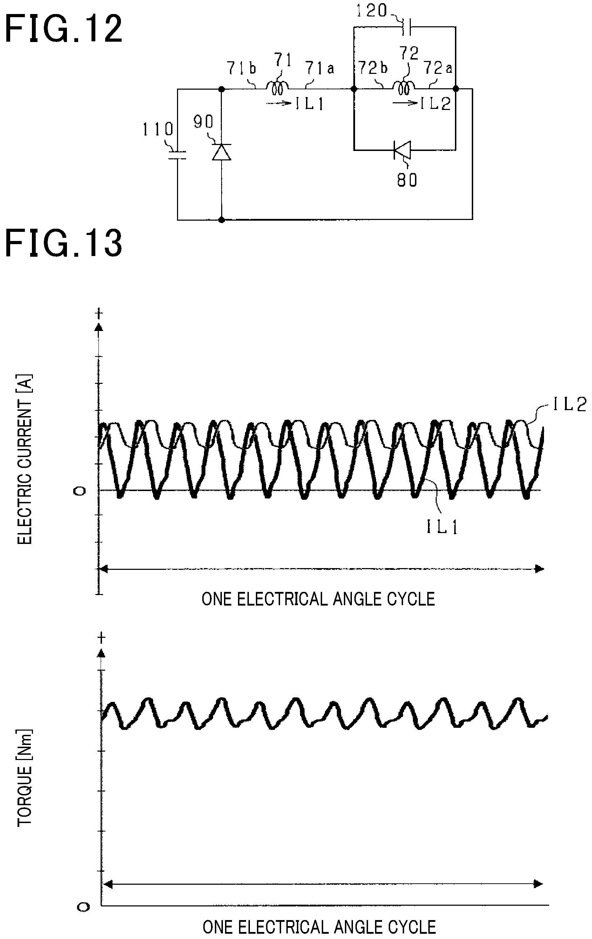

Hereinafter, a fourth embodiment will be described with reference to the drawings, focusing on the differences thereof from the third embodiment. In the fourth embodiment, as shown in FIG. 12, the rotor 60 further includes a capacitor 120 connected in parallel with the second coil section 72. In the present embodiment, the capacitor 120 will be referred to as the coil-side capacitor 120. Moreover, in the present embodiment, the capacitance of the coil-side capacitor 120 is equal to the capacitance of the series capacitor 100 in the first embodiment. In addition, the coil-side capacitor 120 may be implemented by, for example, a ceramic capacitor or a film capacitor.

FIG. 13 shows the changes in the electric current IL1 flowing through the first coil section 71, the electric current IL2 flowing through the second coil section 72 and the torque of the rotating electric machine 40 in one electrical angle cycle of the rotor 60 when the rotational speed of the rotor 60 is 3000rpm and the excitation frequency is 2.4kHz. It should be noted that scales on the vertical axes representing electric current and torque in FIG. 13 are identical to those on the vertical axes representing electric current and torque in FIG. 11.

With the coil-side capacitor 120, it becomes possible to individually set the impedances of the closed circuits formed by the first and second coil sections 71 and 72 and offset the phases of ripples of the electric currents flowing through the closed circuits from each other, thereby reducing the ripple of the field current. As a result, it becomes possible to reduce the torque ripple of the rotating electric machine 40. Moreover, the arrangement of the coil-side capacitor 120 in the vicinity of the parallel diode 80 also leads to reduction in the electrical load on the diodes 80 and 90. In addition, in the present embodiment, the electrical load on the parallel capacitor 110 is also reduced compared to the comparative example described in the first embodiment.

### [Fifth Embodiment]

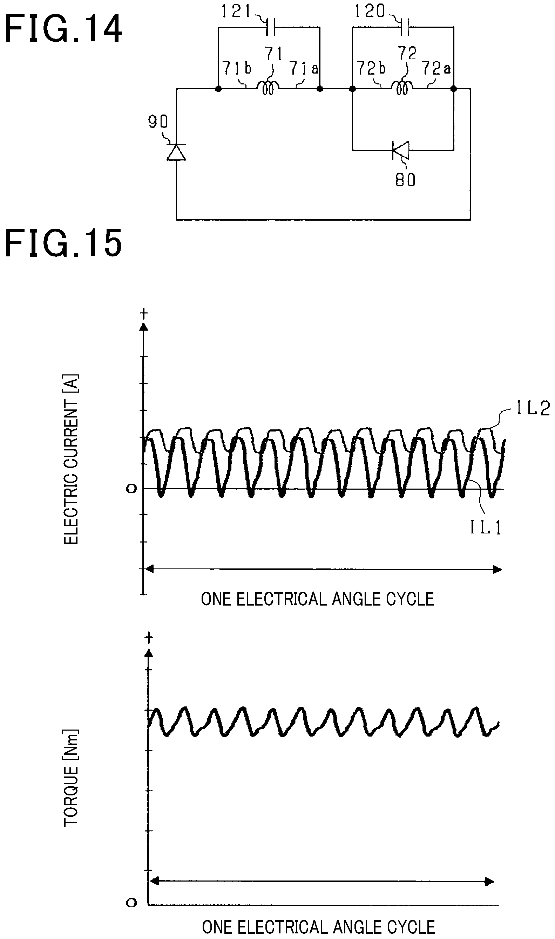

Hereinafter, a fifth embodiment will be described with reference to the drawings, focusing on the differences thereof from the fourth embodiment. In the fifth embodiment, as shown in FIG. 14, the rotor 60 includes a capacitor 121 instead of the parallel capacitor 110. In the present embodiment, the capacitor 121 will be referred to as the first coil-side capacitor 121; and the coil-side capacitor 120 will be referred to as the second coil-side capacitor 120. The first coil-side capacitor 121 is connected in parallel with the first coil section 71. In addition, the first coil-side capacitor 121 may be implemented by, for example, a ceramic capacitor or a film capacitor.

FIG. 15 shows the changes in the electric current IL1 flowing through the first coil section 71, the electric current IL2 flowing through the second coil section 72 and the torque of the rotating electric machine 40 in one electrical angle cycle of the rotor 60 when the rotational speed of the rotor 60 is 3000rpm and the excitation frequency is 2.4kHz. It should be noted that scales on the vertical axes representing electric current and torque in FIG. 15 are identical to those on the vertical axes representing electric current and torque in FIG. 13.

With the second coil-side capacitor 120 and the first coil-side capacitor 121, it becomes possible to individually set the impedances of the closed circuits formed by the first and second coil sections 71 and 72 and offset the phases of ripples of the electric currents flowing through the closed circuits from each other, thereby reducing the ripple of the field current. As a result, it becomes possible to reduce the torque ripple of the rotating electric machine 40. Moreover, in the fourth embodiment, a voltage equal to the sum of the voltage of the first coil section 71 and the voltage of the second coil section 72 is applied to the parallel capacitor 110; in contrast, in the present embodiment, only the voltage of the first coil section 71 is applied to the first coil-side capacitor 121, thereby reducing the load on the first coil-side capacitor 121. Furthermore, the arrangement of the capacitors 120 and 121 respectively in the vicinities of the parallel diode 80 and the series diode 90 also leads to reduction in the electrical load on the diodes 80 and 90.

### [Other Embodiments]

The above-described embodiments may be modified and implemented as follows.

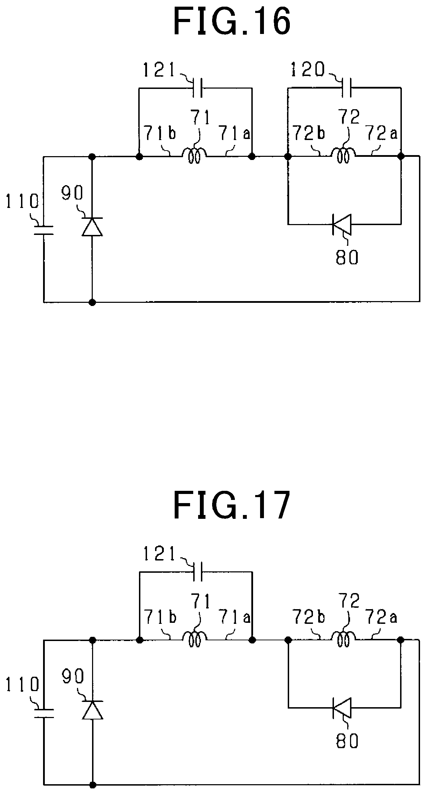

FIG. 16 shows a circuit which is obtained by adding, to the circuit shown in FIG. 12, a capacitor 121 that is connected in parallel with the first coil section 71.

FIG. 17 shows a circuit which is obtained by replacing, in the circuit shown in FIG. 12, the capacitor 120 connected in parallel with the second coil section 72 with a capacitor 121 that is connected in parallel with the first coil section 71.

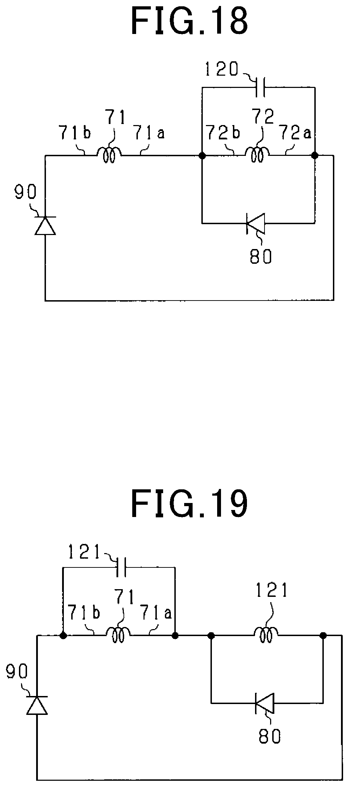

FIG. 18 shows a circuit which is obtained by adding, to the circuit shown in FIG. 8, a capacitor 120 that is connected in parallel with the second coil section 72.

FIG. 19 shows a circuit which is obtained by adding, to the circuit shown in FIG. 8, a capacitor 121 that is connected in parallel with the first coil section 71.

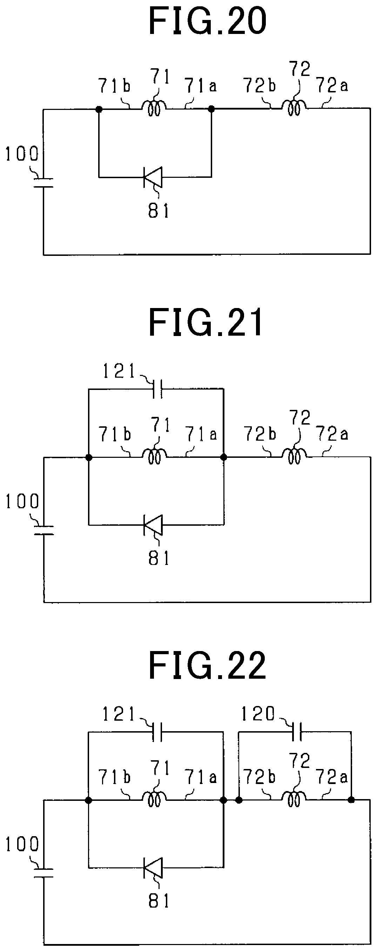

FIG. 20 shows a circuit which is obtained by replacing, in the circuit shown FIG. 4, the parallel diode 80 connected in parallel with the second coil section 72 with a parallel diode 81 that is connected in parallel with the first coil section 71. The parallel diode 81 has its anode connected with the first end 71a of the first coil section 71, and has its cathode connected with the second end 71b of the first coil section 71.

FIG. 21 shows a circuit which is obtained by adding, to the circuit shown in FIG. 20, a capacitor 121 that is connected in parallel with the first coil section 71.

FIG. 22 shows a circuit which is obtained by adding, to the circuit shown in FIG. 21, a capacitor 120 that is connected in parallel with the second coil section 72.

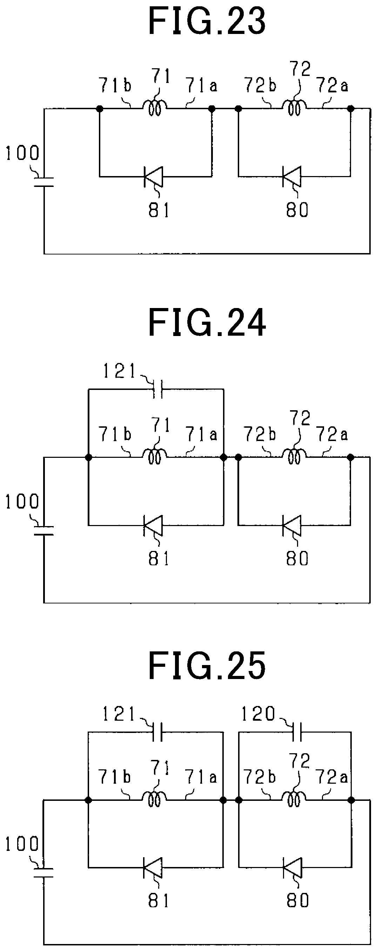

FIG. 23 shows a circuit which is obtained by adding, to the circuit shown in FIG. 4, a parallel diode 81 that is connected in parallel with the first coil section 71.

FIG. 24 shows a circuit which is obtained by adding, to the circuit shown in FIG. 23, a capacitor 121 that is connected in parallel with the first coil section 71. In addition, in the circuit shown in FIG. 24, the capacitor 121 may be connected in parallel with the second coil section 72 instead of with the first coil section 71.

FIG. 25 shows a circuit which is obtained by adding, to the circuit shown in FIG. 24, a capacitor 120 that is connected in parallel with the second coil section 72.

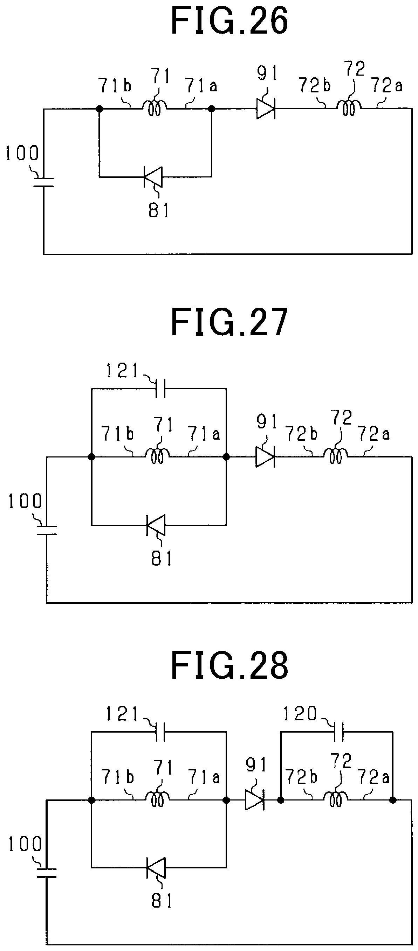

FIG. 26 shows a circuit which is obtained by adding, to the circuit shown in FIG. 20, a series diode 91 that is connected between the first end 71a of the first coil section 71 and the second end 72b of the second coil section 72. The series diode 91 has its anode connected with the first end 71a of the first coil section 71, and has its cathode connected with the second end 72b of the second coil section 72.

FIG. 27 shows a circuit which is obtained by adding, to the circuit shown in FIG. 26, a capacitor 121 that is connected in parallel with the first coil section 71. In addition, in the circuit shown in FIG. 27, the capacitor 121 may be connected in parallel with the second coil section 72 instead of with the first coil section 71.

FIG. 28 shows a circuit which is obtained by adding, to the circuit shown in FIG. 27, a capacitor 120 that is connected in parallel with the second coil section 72.

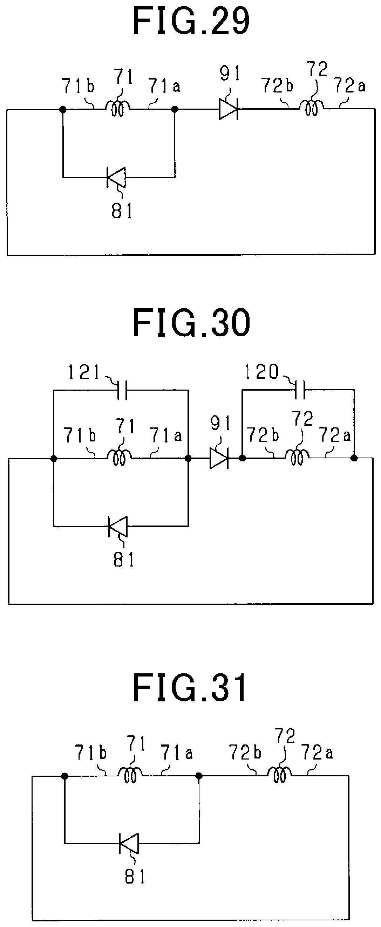

FIG. 29 shows a circuit which is obtained by replacing, in the circuit shown FIG. 8, the series diode 90 connected between the second end 71b of the first coil section 71 and the first end 72a of the second coil section 72 with a series diode 91 that is connected between the first end 71a of the first coil section 71 and the second end 72b of the second coil section 72.

FIG. 30 shows a circuit which is obtained by adding, to the circuit shown in FIG. 29, both a capacitor 121 that is connected in parallel with the first coil section 71 and a capacitor 120 that is connected in parallel with the second coil section 72. In addition, either the capacitor 120 or the capacitor 121 may be omitted from the circuit shown in FIG. 30.

In the circuits shown in FIGS. 26 to 30, the orientations of the diodes 81 and 91 may be reversed. Taking the circuit shown in FIG. 26 as an example, the parallel diode 81 may have its cathode connected with the first end 71a of the first coil section 71, and have its anode connected with the second end 71b of the first coil section 71. Moreover, the series diode 91 may have its cathode with the first end 71a of the first coil section 71, and have its anode connected with the second end 72b of the second coil section 72.

The series capacitor 100 may be omitted from the circuit shown in FIG. 4. In this case, the second end 71b of the first coil section 71 and the first end 72a of the second coil section 72 would be connected with each other. Moreover, in this case, the parallel diode 80 connected in parallel with the second coil section 72 may be replaced with a parallel diode 81 that is connected in parallel with the first coil section 71, as shown in FIG. 31.

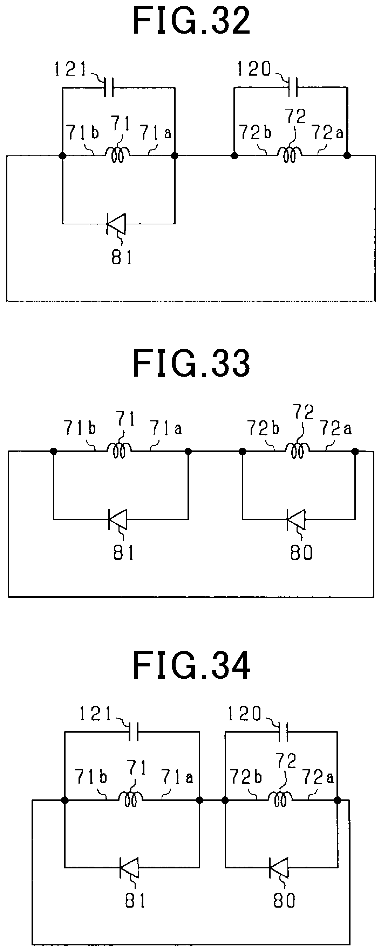

FIG. 32 shows a circuit which is obtained by adding, to the circuit shown in FIG. 31, both a capacitor 121 that is connected in parallel with the first coil section 71 and a capacitor 120 that is connected in parallel with the second coil section 72.

FIG. 33 shows a circuit which is obtained by adding, to the circuit shown in FIG. 31, a parallel diode 80 that is connected in parallel with the second coil section 72.

FIG. 34 shows a circuit which is obtained by adding, to the circuit shown in FIG. 33, both a capacitor 121 that is connected in parallel with the first coil section 71 and a capacitor 120 that is connected in parallel with the second coil section 72.

The number of turns of the second coil section 72 may alternatively be set to be less than the number of turns of the first coil section 71 or to be equal to the number of turns of the first coil section 71.

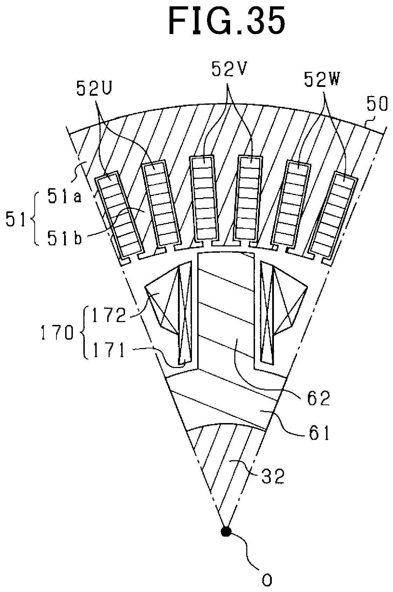

A rotor having a field coil 170 as shown in FIG. 35 may be employed instead of the rotor 60 having the field coil 70 as shown in FIG. 3. Specifically, the field coil 170 has a first coil section 171 wound around each of the main pole portions 62 and a second coil section 172 wound around the outer periphery of the first coil section 171.

The rotating electric machine 40 is not limited to an inner rotor type rotating electric machine, but may alternatively be an outer rotor type rotating electric machine. In this case, the main pole portions 62 protrude radially inward from the rotor core 61.

The rotating electric machine 40 is not limited to a star-connected rotating electric machine, but may alternatively be a delta-connected rotating electric machine.

The stator core 51 may alternatively be a toothless core having no teeth formed therein.

The rotating electric machine 40 is not limited to a rotating electric machine used as an in-vehicle main machine, but may alternatively be, for example, an ISG (Integrated Starter Generator) that serves both as an electric motor and as an electric generator or a rotating electric machine for in-vehicle accessories.

In the above-described embodiments, a single capacitor is connected at a location in the electric current formed in the rotor. Alternatively, a parallel or series connection unit consisting of a plurality of capacitors may be connected at the location in the electric current formed in the rotor. For example, in the electric circuit shown in FIG. 4, a parallel or series connection unit consisting of a plurality of capacitors may be employed instead of the single capacitor 100. A required capacitance may be secured by employing a plurality of capacitors; and redundancy may be ensured by connecting the plurality of capacitors in parallel or in series with one another. In addition, as mentioned above, with increase in the capacitance of a capacitor, the size of the capacitor also increases. In the case of connecting a plurality of capacitors in parallel with each other so as to meet increase in the required capacitance, the volume occupied by the plurality of capacitors also increases with increase in the required capacitance.

The same effects can be achieved with an equivalent rotor electrical circuit in which the positions of the first coil section and the series diode are interchanged compared to the above-described rotor electrical circuits.

A low-capacitance capacitor may be connected in series with the coil and/or the diode; and the impedance adjustment and/or the phase adjustment may be carried out by the capacitor. Moreover, the same effects can also be achieved by connecting a low-resistance resistor, such as a fuse, in series with the coil and/or the diode.

The mobile object in which the rotating electric machine control system is installed is not limited to a vehicle, but may alternatively be, for example, an aircraft or a ship. Moreover, the rotating electric machine control system is not limited to a system installed in a mobile object, but may alternatively be a stationary system.

Hereinafter, characteristic configurations derived from the above-described embodiments will be described.

### [First Configuration]

A rotating electric machine (40) comprising:
a stator (50) having a stator coil (52); and
a rotor (60) radially opposed to the stator,
wherein:
   the rotor has
      main pole portions (62) provided respectively for magnetic poles, which are aligned in a circumferential direction, and each protruding in a radial direction, and
      a field coil (70) wound on each of the main pole portions;
   the field coil has a first coil section (71) and a second coil section (72);
   the rotating electric machine further comprises an electrical path (80, 81) connected in parallel with at least one of the first and second coil sections; and
   the electrical path is configured to have electric current flowing therethrough in one direction.

### [Second Configuration]

The rotating electric machine according to the first configuration, further comprising a restriction unit (90, 91) that is connected in series with one of the first and second coil sections which does not have the electrical path connected in parallel therewith and configured to have electric current flowing therethrough in one direction.

### [Third Configuration]

The rotating electric machine according to the first or second configuration, wherein there is provided, as the electrical path, a parallel diode which is a diode connected in parallel with the at least one of the first and second coil sections.

### [Fourth Configuration]

The rotating electric machine according to the second configuration, wherein there is provided, as the restriction unit, a series diode which is a diode connected in series with the one of the first and second coil sections which does not have the electrical path connected in parallel therewith.

### [Fifth Configuration]

The rotating electric machine according to any one of the second to fourth configurations, further comprising a parallel capacitor (110) which is a capacitor connected in parallel with the restriction unit.

### [Sixth Configuration]

The rotating electric machine according to the fifth configuration, further comprising a coil-side capacitor (120, 121) which is a capacitor connected in parallel with at least one of the first and second coil sections.

### [Seventh Configuration]

The rotating electric machine according to any one of the first to fourth configurations, further comprising a coil-side capacitor (120, 121) which is a capacitor connected in parallel with at least one of the first and second coil sections.

### [Eighth Configuration]

The rotating electric machine according to the sixth or seventh configuration, wherein the coil-side capacitor is connected in parallel with each of the first and second coil sections.

### [Ninth Configuration]

The rotating electric machine according to any one of the first to eighth configurations, wherein the electrical path is connected in parallel with one of the first and second coil sections which has weaker magnetic coupling with the stator coil than the other of the first and second coil sections.

### [Tenth Configuration]

The rotating electric machine according to any one of the first to eighth configurations, wherein the electrical path is connected in parallel with one of the first and second coil sections which is radially located farther from the stator coil than the other of the first and second coil sections.

### [Eleventh Configuration]

The rotating electric machine according to the ninth configuration, wherein the number of turns of the one of the first and second coil sections which has weaker magnetic coupling with the stator coil is greater than the number of turns of the other of the first and second coil sections which has stronger magnetic coupling with the stator coil.

### [Twelfth Configuration]

The rotating electric machine according to the tenth configuration, wherein the number of turns of the one of the first and second coil sections which is radially located farther from the stator coil is greater than the number of turns of the other of the first and second coil sections which is radially located closer to the stator coil.

### [Thirteenth Configuration]

The rotating electric machine according to any one of the first to fourth configurations, wherein the number of turns of one of the first and second coil sections which has the electrical path connected in parallel therewith is greater than the number of turns of the other of the first and second coil sections which does not have the electrical path connected in parallel therewith.

While the present disclosure has been described pursuant to the above embodiments, it should be appreciated that the present disclosure is not limited to the embodiments and the structures. Instead, the present disclosure encompasses various modifications and changes within equivalent ranges. In addition, various combinations and modes are also included in the category and the scope of technical idea of the present disclosure.

## Claims

1. A rotating electric machine (40) comprising:
a stator (50) having a stator coil (52); and
a rotor (60) radially opposed to the stator,
wherein:
the rotor has
main pole portions (62) provided respectively for magnetic poles, which are aligned in a circumferential direction, and each protruding in a radial direction, and
a field coil (70) wound on each of the main pole portions;
the field coil has a first coil section (71) and a second coil section (72);
the rotating electric machine further comprises an electrical path (80, 81) connected in parallel with at least one of the first and second coil sections; and
the electrical path is configured to have electric current flowing therethrough in one direction.

2. The rotating electric machine as set forth in Claim 1, further comprising a restriction unit (90, 91) that is connected in series with one of the first and second coil sections which does not have the electrical path connected in parallel therewith and configured to have electric current flowing therethrough in one direction.

3. The rotating electric machine as set forth in Claim 1, wherein there is provided, as the electrical path, a parallel diode which is a diode connected in parallel with the at least one of the first and second coil sections.

4. The rotating electric machine as set forth in Claim 2, wherein there is provided, as the restriction unit, a series diode which is a diode connected in series with the one of the first and second coil sections which does not have the electrical path connected in parallel therewith.

5. The rotating electric machine as set forth in Claim 2 or 4, further comprising a parallel capacitor (110) which is a capacitor connected in parallel with the restriction unit.

6. The rotating electric machine as set forth in Claim 5, further comprising a coil-side capacitor (120, 121) which is a capacitor connected in parallel with at least one of the first and second coil sections.

7. The rotating electric machine as set forth in any one of Claims 1 to 4, further comprising a coil-side capacitor (120, 121) which is a capacitor connected in parallel with at least one of the first and second coil sections.

8. The rotating electric machine as set forth in Claim 6, wherein the coil-side capacitor is connected in parallel with each of the first and second coil sections.

9. The rotating electric machine as set forth in any one of Claims 1 to 4, wherein the electrical path is connected in parallel with one of the first and second coil sections which has weaker magnetic coupling with the stator coil than the other of the first and second coil sections.

10. The rotating electric machine as set forth in any one of Claims 1 to 4, wherein the electrical path is connected in parallel with one of the first and second coil sections which is radially located farther from the stator coil than the other of the first and second coil sections.

11. The rotating electric machine as set forth in Claim 9, wherein the number of turns of the one of the first and second coil sections which has weaker magnetic coupling with the stator coil is greater than the number of turns of the other of the first and second coil sections which has stronger magnetic coupling with the stator coil.

12. The rotating electric machine as set forth in Claim 10, wherein the number of turns of the one of the first and second coil sections which is radially located farther from the stator coil is greater than the number of turns of the other of the first and second coil sections which is radially located closer to the stator coil.

13. The rotating electric machine as set forth in any one of Claims 1 to 4, wherein the number of turns of one of the first and second coil sections which has the electrical path connected in parallel therewith is greater than the number of turns of the other of the first and second coil sections which does not have the electrical path connected in parallel therewith.
